# EUROPEAN PATENT SPECIFICATION

(11) **EP 4 366 027 B1**
(45) Date of publication and mention of the grant of the patent: **09.12.2026**
(21) Application number: 22846129.9
(22) Date of filing: 13.07.2022
(51) Int. Cl.: H01M 10/42, H01M 10/48, H01M 50/213, H01M 50/249, H01M 50/569, H01M 50/284, H01M 50/287

(54) **BATTERY PACK**
BATTERIEPACK
BLOC-BATTERIE

(30) Priority: 22.07.2021 KR 20210096633
(43) Date of publication of application: 08.05.2024
(73) Proprietor: HD Construction Equipment Co., Ltd., Seongnam-si, Gyeonggi-do 13553 (KR)
(72) Inventor: JEON, Jae Seung, Incheon 21930 (KR)
(74) Representative: Isarpatent
(86) International application number: PCT/KR2022/010190
(87) International publication number: WO 2023/003259

(56) References cited:
- WO-A1-2019/164974
- KR-A- 20120 021 393
- KR-A- 20160 053 694
- KR-A- 20160 053 694
- KR-A- 20160 058 452
- KR-A- 20170 023 466
- KR-A- 20180 094 632
- US-A1- 2012 121 939
- US-A1- 2021 028 502
- US-A1- 2021 098 765

## Description

### [Technical Field]

The present disclosure relates to a battery pack and more particularly to a battery pack which includes a battery module frame on which a control module mounting portion is formed on one outer side thereof and a control module which is coupled to the control module mounting portion.

### [Background Art]

A secondary battery which can be easily applied depending on a product group and has electrical characteristics such as high energy density is being generally used not only in portable devices but also in an electric vehicle (EV) or a hybrid electric vehicle (HEV) which is driven by an electrical drive source.

The secondary battery not only has a primary advantage of being able to significantly reduce the use of fossil fuels, but also does never generate any by-products due to energy use. In this respect, the secondary battery is attracting attention as a new energy source for improving eco-friendliness and energy efficiency.

The type of the secondary battery currently widely used includes a lithium-ion battery, a lithium polymer battery, a nickel cadmium battery, a nickel hydrogen battery, and a nickel zinc battery.

The operating voltage of such a unit secondary battery cell, that is, a unit battery cell, is approximately 2.5 V to 4.5 V. Therefore, when an output voltage higher than the operating voltage is required, a battery pack is formed by connecting in series a plurality of battery cells. Also, the battery pack may also be formed by connecting numbers of battery cells in parallel depending on a charge/discharge capacity required for the battery pack. Accordingly, the number of battery cells included in the battery pack may be variously set depending on the required output voltage or charge/discharge capacity.

As such, the battery pack including a plurality of cells blocks overcurrent in various ways to obtain safety in use. For example, when cell temperature sensed by a thermistor exceeds a standard value, a BMS module blocks the current flowing through the battery pack.

The thermistor for measuring current cell temperature is generally attached to the battery cell by means of glue or a fixing tape in a manufacturing process of the battery pack. However, it is not easy to attach the thermistor to a correct position. Also, when the thermistor is attached by using the glue, there is a possibility that the thermistor is separated from the battery cell during the process before the glue is cured. When the thermistor is attached by using the tape, there is a possibility that the thermistor is separated from the battery cell not only during the process but also during use of the product.

If the thermistor attached to the battery cell is separated from a designed attachment position, it is difficult to accurately sense the battery cell temperature, so that it is not possible to block the overcurrent flowing through the battery pack even when the battery cell temperature rises due to short circuit. This can lead to ignition/explosion of the battery pack.

Accordingly, there is a need to develop a battery pack that has not only a structure capable of securely fixing the thermistor in a manufacturing process of the battery pack, but also has a structure that prevents the thermistor from being separated from the mounted position during use of the battery pack.

US 2021/028502 A1 relates to a battery pack including a cell block including battery cells electrically connected to each other. US 2021/098765 A1 relates to a battery module with a flexible interconnector.

### [DISCLOSURE]

### [Technical Problem]

The embodiment of the present disclosure is designed to overcome the above problems of related technical fields and the purpose of the present disclosure is to provide a battery pack which is able to improve assemblability of a thermistor when coupled to a battery module and to shorten the manufacturing process by forming a battery management system module-integrated thermistor, thereby more accurately measuring battery cell temperature.

### [Technical Solution]

The present invention is set out by the appended independent claim. Advantageous embodiments are provided in dependent claims.

According to the present invention, a battery pack is provided, as defined by independent claim 1. The battery pack includes: a battery module configured to include a battery module frame including a cell mounting portion formed therein on which a plurality of battery cells is disposed and a control module mounting portion formed on one outer side surface thereof; a control module configured to be coupled to the control module mounting portion and control operations of the battery cell; and a thermistor unit configured to be connected to the control module, to come into contact with the battery cell, and to measure a temperature of the battery cell.

The control module includes: a control module frame configured to be coupled to the control module mounting portion; a main circuit board configured to be disposed on the control module frame; and a sub-circuit board configured to be disposed on the control module frame and to be electrically connected to the main circuit board.

One or more cut portions are formed by being cut in an inward direction of the control module mounting portion. One or more protrusions are formed at positions corresponding to the cut portions in the control module frame in such a way as to protrude toward the cut portions. The sub-circuit board is formed with a circuit extension part which extends to the protrusion. The thermistor unit is electrically connected to the circuit extension part and disposed at an end of the protrusion. When the protrusion is inserted into the cut portion, the thermistor unit comes into contact with the battery cell.

The thermistor unit may include: a thermistor chip configured to be disposed on an end surface of the protrusion; and a heat conduction pad configured to be disposed on the end surface of the protrusion and to surround the thermistor chip.

The battery pack may include: an insertion portion configured to be disposed in both inner sides of the cut portion and to protrude in a direction facing each other; and an insertion protrusion configured to be disposed on both sides of the protrusion and to be inserted into the insertion portion.

The battery module may further include: a support block configured to be arranged to protrude outward from the control module mounting portion and has a fastening hole formed therein; a stepped portion configured to be formed inward at both ends of the control module mounting portion and to allow the control module frame to be inserted thereinto; and a fitting piece configured to be formed to protrude outward from the control module mounting portion. The control module may include: a piece contact portion configured to be formed in the control module frame, to allow the support block to contact, to support the control module frame, and to have a through hole that is bolted to the fastening hole; and a fitting recess configured to be formed in the control module frame, to allow the fitting piece to be inserted thereinto, and to support the control module frame.

### [Advantageous Effect]

According to the embodiment of the present disclosure, since the thermistor is integrated into the battery management system module, it is possible to improve assemblability of the thermistor when coupled to a battery module and to shorten the manufacturing process.

This ultimately increases the operational stability of the thermistor and leads to more accurate measurement of battery cell temperature.

### [Description of Drawings]

FIG. 1 is a perspective view showing an assembly type of a battery module and a control module in a battery pack of an embodiment of the present disclosure;
FIG. 2 is a perspective view showing another assembly type of the battery module and the control module in the battery pack of the embodiment of the present disclosure;
FIG. 3 is one side perspective view of the control module in the battery pack of the embodiment of the present disclosure;
FIG. 4 is another side perspective view of the control module in the battery pack of the embodiment of the present disclosure;
FIG. 5 is a partial plan view showing a state before a thermistor unit comes into contact with a battery cell when the battery module and the control module are assembled in the battery pack of the embodiment of the present disclosure; and
FIG. 6 is a partial plan view showing a state after the thermistor unit comes into contact with the battery cell when the battery module and the control module are assembled in the battery pack of the embodiment of the present disclosure.

### [Mode for Invention]

The features, advantages and method for accomplishment of the present invention will be more apparent from referring to the following detailed embodiments described as well as the accompanying drawings. However, the present invention is not limited to the embodiment to be disclosed below and is implemented in different and various forms. The embodiments bring about the complete disclosure of the present invention and are provided to make those skilled in the art fully understand the scope of the present invention. The present invention is just defined by the scope of the appended claims.

Since the shapes, sizes, proportions, angles, numbers, etc., disclosed in the drawings for describing the embodiments of the present invention are illustrative, the present invention is not limited to the shown details. The same reference numerals throughout the disclosure correspond to the same elements. Also, throughout the description of the present invention, the detailed description of known technologies incorporated herein will be omitted when it may make the subject matter of the present invention unclear. Terms such as "includes", "has", "composed", etc., mentioned in the present disclosure are used, other parts can be added unless a term "only" is used. A component represented in a singular form includes the expression of plural form thereof unless otherwise explicitly mentioned.

In construing components, error ranges are construed as being included even unless otherwise explicitly mentioned.

In describing positional relationships, when the positional relationship of two parts is described, for example, "on", "over", "under", "next to", etc., one or more other parts may be positioned between the two parts as long as a term "directly" or "immediately" is not used.

While terms such as the first and the second, etc., can be used to describe various components, the components are not limited by the terms mentioned above. The terms are used only for distinguishing between one component and other components. Therefore, the first component to be described below may be the second component within the present invention.

The same reference numerals throughout the disclosure correspond to the same elements.

The size and thickness of each component shown in the drawings may be provided for convenience of description, and the present invention is not necessarily limited to the size and thickness.

The features of the various embodiments of the present disclosure can be partially or entirely coupled to or combined with each other, and as those skilled in the art can fully understand, the features can be technically and variously connected and driven. Also, the embodiments can be implemented independently of each other or together in an association relationship.

Hereinafter, preferred embodiments of a battery pack according to the present disclosure will be described in detail with reference to the attached drawings.

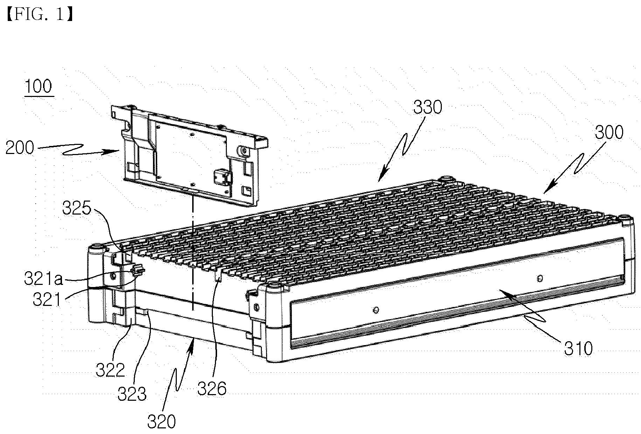

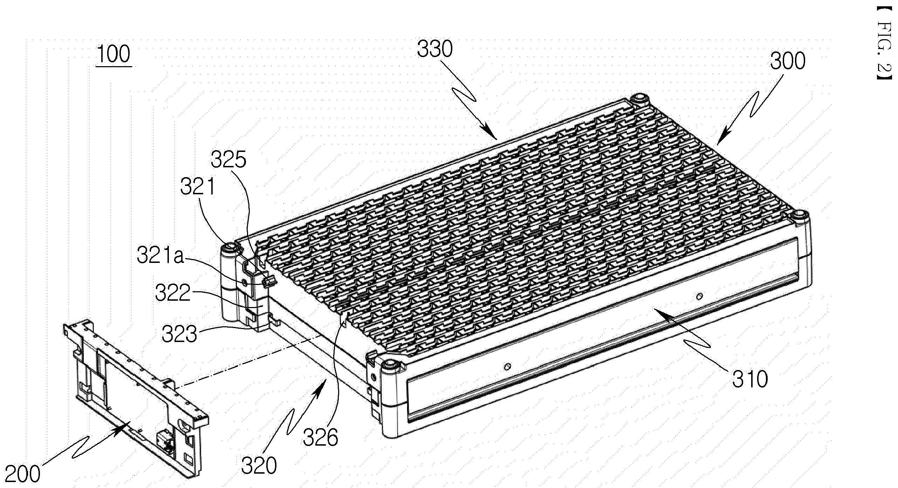

Referring to FIGS. 1 and 2, a battery pack 100 of the present disclosure may include a battery module 300, a control module 200, and a thermistor unit 250.

The battery module 300 may include a battery module frame 310, a partition wall 340, and a bus bar 500.

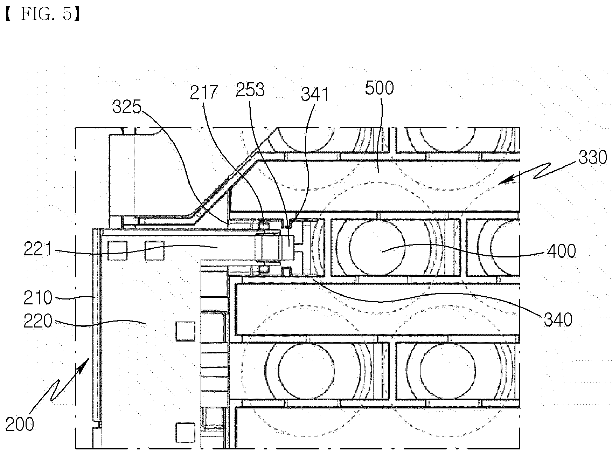

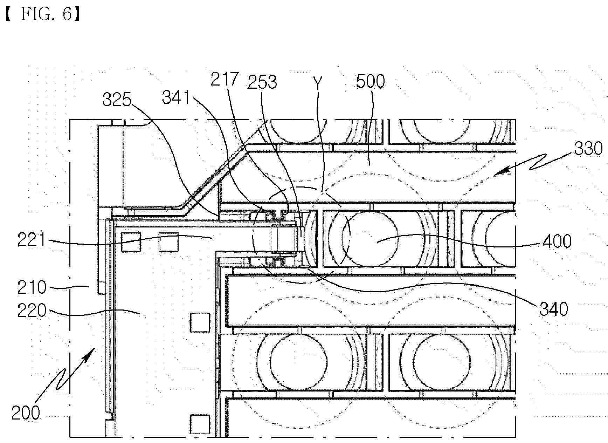

Specifically, the battery module frame 310 may form an overall appearance of the battery module 300 and may include a cell mounting portion 330 formed therein on which a plurality of battery cells 400 can be disposed. Referring to FIGS. 5 and 6, it can be seen that the plurality of battery cells 400 is arranged within the battery module frame 310 in a plurality of columns and rows. The cell mounting portion 330 is formed within the battery module frame 310 and protects the plurality of battery cells 400 from external impact.

A control module mounting portion 320 may be formed on one outer side surface of the battery module frame 310. The control module mounting portion 320 may include a support block 321, a stepped portion 322, a fitting piece 323, and cut portions 325 and 326.

The support block 321 may be arranged to protrude outward from the control module mounting portion 320 and may have a fastening hole 321a formed in a central portion thereof. A thread may be processed within the fastening hole 321a such that a bolt can be coupled thereto. In the embodiment of the present disclosure, the support block 321 may have a cross shape, but is not limited thereto.

The stepped portion 322 may be formed inward at both ends of the control module mounting portion 320. The control module 200 may be inserted into the inside of the stepped portion 322.

The fitting piece 323 may be disposed below the support block 321 in the control module mounting portion 320 and may be formed to protrude outward. In the embodiment of the present disclosure, the fitting piece 323 has a quadrangular shape having one open side, but is not limited thereto.

The cut portions 325 and 326 may be formed in an upper portion of the control module mounting portion 320 and may be formed by being cut in an inward direction of the cell mounting portion 330. One or more cut portions 325 and 326 may be formed, and in the embodiment of the present disclosure, two cut portions may be formed. In this case, the temperature of the battery cell 400 is measured by inserting the thermistor unit 250 into two points and contacting the thermistor unit 250 with the battery cell 400, thereby improving the accuracy of an average temperature value of the battery cell 400. According to design specifications, the temperature of the battery cell 400 may be measured by forming the cut portions 325 and 326 in more locations and by inserting and contacting the thermistor unit 250 with the battery cell. In this case, the accuracy of the average temperature value of the battery cell 400 can be further improved.

Next, referring to FIGS. 5 and 6, the partition wall 340 is formed on the battery module frame 310 and may separate the plurality of battery cells 400 from each other. Even if a specific battery cell 400 is degraded and spark or fire occurs locally, the partition wall 340 blocks the spark or fire or delays the spread of the spark or fire, thereby preventing the spark or fire from spreading to other battery cells 400 or delaying the spread. This can prevent or delay the occurrence of deterioration of the entire battery module 300. Ultimately, when the partition wall is installed in an electric vehicle, the partition wall allows a driver to have evacuation time and fire suppression time.

Referring to FIGS. 5 and 6, the bus bar 500 may be disposed between the partition walls 340 over the battery module frame 310 and may be electrically connected to the plurality of battery cells 400. As is known, the bus bar 500 allows the plurality of battery cells 400 to be connected in parallel or in series as needed.

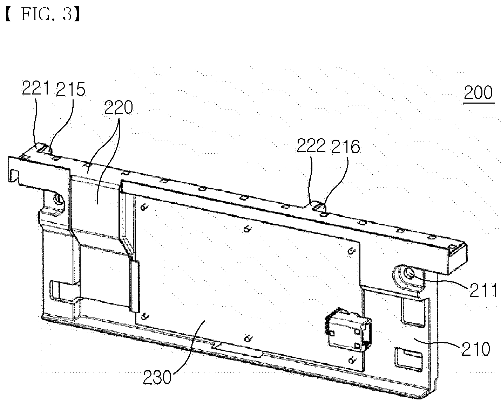

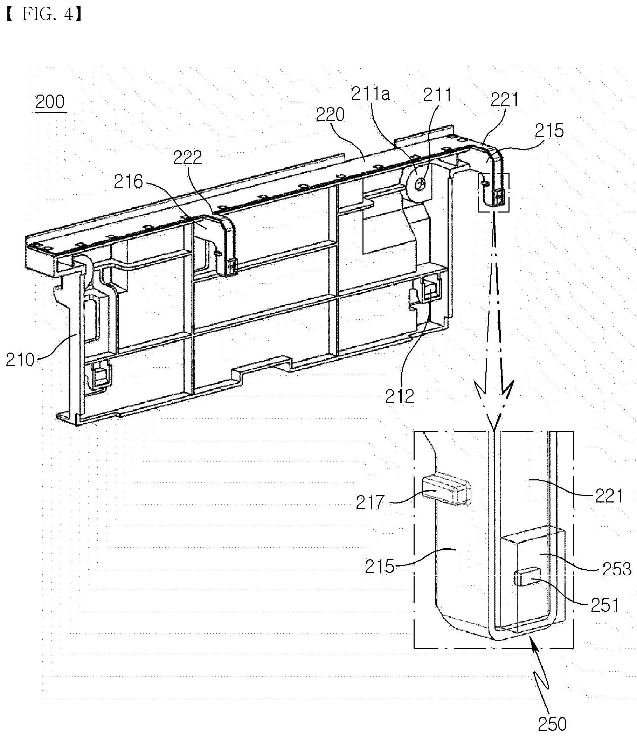

Meanwhile, referring to FIGS. 3 and 4, the control module 200 may be coupled to the control module mounting portion 320 and may control the operation of the battery cell 400. In the embodiment of the present disclosure, the control module 200 may be a battery management system (BMS) module.

The control module 200 may include a control module frame 210, a main circuit board 230, a sub-circuit board 220, circuit extension parts 221 and 222, protrusions 215 and 216, a piece contact portion 211a, and a fitting recess 212.

The control module frame 210 may form an overall appearance of the control module 200 and may be coupled to the control module mounting portion 320.

The main circuit board 230 may be disposed in a central portion of the control module frame 210. Electronic components capable of controlling the battery cell 400 may be electrically connected and disposed on the main circuit board 230. In the embodiment of the present disclosure, the main circuit board 230 may be a BMS printed circuit board.

The sub-circuit board 220 may be electrically connected to the main circuit board 230 and may extend to a top of the control module frame 210. In the embodiment of the present disclosure, unlike a prior art, the sub-circuit board 220 is arranged to extend to the top of the control module frame 210. Here, the sub-circuit board 220 may be a flexible printed circuit board (FPCB).

As such, a technical reason why the sub-circuit board 220 is disposed up to the top of the control module frame 210 is to extend the electrical circuit connection to the protrusions 215 and 216.

The protrusions 215 and 216 may be formed at positions corresponding to the cut portions 325 and 326 in such a way as to protrude from the top of the control module frame 210 toward the cut portions 325 and 326.

Also, the sub-circuit board 220 may be formed with the circuit extension parts 221 and 222 which extend to the protrusions 215 and 216.

Here, the thermistor unit 250 may be disposed at the ends of the protrusions 215 and 216 and may be electrically connected to the circuit extension parts 221 and 222.

That is, in the embodiment of the present disclosure, in order to achieve the purpose of improving assemblability and of shortening the manufacturing process by integrating the thermistor unit 250 into the control module 200, the sub-circuit board 220 is disposed up to the top of the control module frame 210, and the circuit extension parts 221 and 222 are formed on the sub-circuit board 220 and are disposed up to the protrusions 215 and 216.

Accordingly, an electrical signal is transmitted to the thermistor unit 250 integrally coupled to the control module 200. When the control module 200 is just assembled to the battery module 300, the thermistor unit 250 comes into contact with the battery cell 400 and thus the temperature of the battery cell 400 can be measured. Accordingly, there is no requirement for a separate attachment process of welding the thermistor unit 250 to the battery cell 400.

Next, the piece contact portion 211a may be formed on the upper portion of the control module frame 210. The support block 321 may come into contact with the piece contact portion 211a. The piece contact portion 211a may support an upper position of the control module frame 210. A through hole 211 that can be bolted to the fastening hole 321a may be formed in the central portion of the piece contact portion 211a.

The fitting recess 212 may be formed in a lower portion of the control module frame 210. A fitting block may be inserted into the fitting recess 212. The fitting recess 212 may support a lower position of the control module frame 210.

Meanwhile, referring to FIG. 4, the thermistor unit 250 may be connected to the control module 200, may come into contact with the battery cell 400, and may measure the temperature of the battery cell 400.

The thermistor unit 250 may include a thermistor chip 251 and a heat conduction pad 253.

The thermistor chip 251 may be disposed on end surfaces of the protrusions 215 and 216. The thermistor chip used in the present disclosure can perform a sensor function which converts a thermal signal into an electrical signal by using resistance changes according to temperature.

The heat conduction pad 253 may be disposed on the end surfaces of the protrusions 215 and 216 and may surround the thermistor chip 251. That is, the thermistor chip 251 does not come into direct contact with the battery cell 400, and the thermal conductive pad 253 may bring into contact with the battery cell 400 and the heat of the battery cell 400 may be conducted through the heat conduction pad and may be transmitted to the thermistor chip 251. The heat conduction pad 253 may be made of an elastic material, and accordingly, when the heat conduction pad 253 is deformed in shape by contact with the battery cell 400, the heat conduction pad 253 can maintain the contact state and eliminate gaps in the battery cell 400. Accordingly, the temperature of the battery cell 400 can be accurately transmitted to the thermistor chip 251.

Here, referring to FIGS. 5 and 6, insertion portions 341 are disposed in both inner sides of the cut portion 325. The insertion portions 341 protrude from both inner sides of the cut portion 325 in a direction facing each other. Although not shown in the drawings, a groove is formed in the insertion portion 341.

Also, insertion protrusions 217 are disposed on both sides of the protrusion 215. As the insertion protrusion 217 is inserted into the insertion portion 341, the position of the protrusion 215 is fixed within the cut portion 325.

Due to such a configuration of the insertion portion 341 and the insertion protrusion 217, the heat conduction pad 253 can be stably maintained in contact with the surface of the battery cell 400.

Meanwhile, referring to FIGS. 5 and 6, FIG. 5 is a partial plan view showing a state before the thermistor unit 250 comes into contact with the battery cell 400 when the battery module 300 and the control module 200 are assembled in the battery pack 100 of the embodiment of the present disclosure. FIG. 6 is a partial plan view showing a state after the thermistor unit 250 comes into contact with the battery cell 400 when the battery module 300 and the control module 200 are assembled in the battery pack 100 of the embodiment of the present disclosure.

First, referring to FIG. 5, the partition wall 340 and the bus bar 500 are disposed on the battery module frame 310, and the cut portion 325 is formed in a portion leading from a portion of the partition wall 340 to the control module mounting portion 320. A pair of insertion portions 341 is formed on both inner sides of the cut portion 325.

Also, the circuit extension part 221 of the flexible printed circuit board extends to the protrusion 215 on the upper portion of the control module frame 210, and the heat conduction pad 253 is disposed on the end surface of the protrusion 215. As described above, the thermistor chip 251 is built into the heat conduction pad 253. A pair of insertion protrusions 217 is formed on both sides of the protrusion 215.

Next, referring to FIG. 6, the control module 200 is assembled to the control module mounting portion 320 of the battery module frame 310. That is, the control module 200 is pushed into the stepped portion 322 of the control module mounting portion 320, and then the through hole 211 and the fastening hole 321a are bolted.

Here, referring to an area marked with Y, the protrusion 215 is further inserted into the cut portion 325, and the heat conduction pad 253 comes into contact with the surface of the battery cell 400. At the same time, as the insertion protrusion 217 is inserted into the insertion portion 341, the position of the protrusion 215 is fixed within the cut portion 325.

As such, only by a simple process of assembling the control module 200 to the battery module 300, the thermistor unit 250 automatically comes into contact with the battery cell 400, thereby measuring the temperature of the battery cell 400.

According to the embodiment of the present disclosure, the control module 200 and the thermistor unit 250 are integrated with each other. Therefore, when the control module 200 and the battery module 300 are coupled, the thermistor unit 250 automatically comes into contact with the battery cell 400. Accordingly, ultimately, there are technical effects of improving assemblability of the battery pack 100 and of shortening the manufacturing process. Also, it is possible to increase the operational stability of the thermistor unit 250 compared to a conventional soldering method and to measure the temperature of the battery cell 400 more accurately.

The above descriptions merely show a specific embodiment of the battery pack.

The present disclosure relates to a battery pack and has industrial applicability

## Claims

1. A battery pack (100) comprising:
a battery module (300) configured to include a battery module frame (310) including a cell mounting portion (330) formed therein on which a plurality of battery cells (400) is disposed and a control module mounting portion (320) formed on one outer side surface thereof;
a control module (200) configured to be coupled to the control module mounting portion (320) and control operations of the battery cell (400); and
a thermistor unit (250) configured to be connected to the control module (200), to come into contact with the battery cell (400), and to measure a temperature of the battery cell (400),
wherein the control module (200) comprises:
a control module frame (210) configured to be coupled to the control module mounting portion (320);
a main circuit board (230) configured to be disposed on the control module frame (210); and
a sub-circuit board (220) configured to be disposed on the control module frame (210) and to be electrically connected to the main circuit board (230),
wherein one or more cut portions (325, 326) are formed by being cut in an inward direction of the control module mounting portion (320),
wherein one or more protrusions (215, 216) are formed at positions corresponding to the cut portions (325, 326) in the control module frame (210) in such a way as to protrude toward the cut portions (325, 326),
wherein the sub-circuit board (220) is formed with a circuit extension part (221, 222) which extends to the protrusion (215, 216),
wherein the thermistor unit (250) is electrically connected to the circuit extension part (221, 222) and disposed at an end of the protrusion (215, 216), and
wherein, when the protrusion (215, 216) is inserted into the cut portion (325, 326), the thermistor unit (250) comes into contact with the battery cell (400).

2. The battery pack (100) of claim 1, wherein the thermistor unit (250) comprises:
a thermistor chip (251) configured to be disposed on an end surface of the protrusion (215, 216); and
a heat conduction pad (253) configured to be disposed on the end surface of the protrusion (215, 216) and to surround the thermistor chip (251).

3. The battery pack (100) of claim 1, comprising:
an insertion portion (341) configured to be disposed in both inner sides of the cut portion (325, 326) and to protrude in a direction facing each other; and
an insertion protrusion (217) configured to be disposed on both sides of the protrusion (215, 216) and to be inserted into the insertion portion (341).

4. The battery pack (100) of claim 1,
wherein the battery module (300) further comprises:
a support block (321) configured to be arranged to protrude outward from the control module mounting portion (320) and has a fastening hole (321a) formed therein;
a stepped portion (322) configured to be formed inward at both ends of the control module mounting portion (320) and to allow the control module frame (210) to be inserted thereinto; and
a fitting piece (323) configured to be formed to protrude outward from the control module mounting portion (320),
and wherein the control module (200) comprises:
a piece contact portion (211a) configured to be formed in the control module frame (210), to allow the support block (321) to contact, to support the control module frame (210), and to have a through hole (211) that is bolted to the fastening hole (321a); and
a fitting recess (212) configured to be formed in the control module frame (210), to allow the fitting piece (323) to be inserted thereinto, and to support the control module frame (210).

## Patentansprüche

1. Batteriepack (100), umfassend:
ein Batteriemodul (300), das dazu eingerichtet ist, einen Batteriemodulrahmen (310) aufzuweisen, aufweisend einen darin gebildeten Zellenmontageabschnitt (330), auf dem mehrere Batteriezellen (400) angeordnet sind, und einen Steuermodulmontageabschnitt (320), der an einer Außenseitenfläche davon gebildet ist;
ein Steuermodul (200), das dazu eingerichtet ist, mit dem Steuermodulmontageabschnitt (320) gekoppelt zu sein und den Betrieb der Batteriezellen (400) zu steuern; und
eine Thermistoreinheit (250), die dazu eingerichtet ist, mit dem Steuermodul (200) verbunden zu sein, mit der Batteriezelle (400) in Kontakt zu sein und eine Temperatur der Batteriezelle (400) zu messen,
wobei das Steuermodul (200) umfasst:
einen Steuermodulrahmen (210), der dazu eingerichtet ist, mit dem Steuermodulmontageabschnitt (320) gekoppelt zu sein;
eine Hauptplatine (230), die dazu eingerichtet ist, an dem Steuermodulrahmen (210) angeordnet zu sein; und
eine Nebenplatine (220), die dazu eingerichtet ist, an dem Steuermodulrahmen (210) angeordnet zu sein und elektrisch mit der Hauptplatine (230) verbunden zu sein,
wobei ein oder mehrere Ausschnittabschnitte (325, 326) durch Ausschneiden in einer nach innen gerichteten Richtung des Steuermodulmontageabschnitts (320) gebildet sind,
wobei ein oder mehrere Vorsprünge (215, 216) an Positionen, die den Ausschnittabschnitten (325, 326) entsprechen, in dem Steuermodulrahmen (210) in einer solchen Weise gebildet sind, dass sie in Richtung der Ausschnittabschnitte (325, 326) abstehen,
wobei die Nebenplatine (220) mit einem Schaltungsverlängerungsteil (221, 222) gebildet ist, der sich bis zu dem Vorsprung (215, 216) erstreckt,
wobei die Thermistoreinheit (250) elektrisch mit dem Schaltungsverlängerungsteil (221, 222) verbunden und an einem Ende des Vorsprungs (215, 216) angeordnet ist, und
wobei, wenn der Vorsprung (215, 216) in den Ausschnittabschnitt (325, 326) eingeführt ist, die Thermistoreinheit (250) mit der Batteriezelle (400) in Kontakt kommt.

2. Batteriepack (100) nach Anspruch 1, wobei die Thermistoreinheit (250) umfasst:
einen Thermistor-Chip (251), der dazu eingerichtet ist, an einer Endfläche des Vorsprungs (215, 216) angeordnet zu sein; und
ein Wärmeleitpad (253), das dazu eingerichtet ist, an der Endfläche des Vorsprungs (215, 216) angeordnet zu sein und den Thermistor-Chip (251) zu umgeben.

3. Batteriepack (100) nach Anspruch 1, umfassend:
einen Einführabschnitt (341), der dazu eingerichtet ist, in beiden Innenseiten des Ausschnittabschnitts (325, 326) angeordnet zu sein und in einer einander zugewandten Richtung vorzustehen; und
einen Einführvorsprung (217), der dazu eingerichtet ist, auf beiden Seiten des Vorsprungs (215, 216) angeordnet zu sein und in den Einführabschnitt (341) eingeführt zu sein.

4. Batteriepack (100) nach Anspruch 1,
wobei das Batteriemodul (300) des Weiteren umfasst:
einen Stützblock (321), der dazu eingerichtet ist, so angeordnet zu sein, dass er von dem Steuermodulmontageabschnitt (320) nach außen absteht, und in dem ein Befestigungsloch (321a) gebildet ist;
einen gestuften Abschnitt (322), der so eingerichtet ist, dass er an beiden Enden des Steuermodulmontageabschnitts (320) nach innen gebildet ist und das Einführen des Steuermodulrahmens (210) dort hinein erlaubt; und
ein Passstück (323), das dazu eingerichtet ist, so gebildet zu sein, dass es von dem Steuermodulmontageabschnitt (320) nach außen absteht,
und wobei das Steuermodul (200) umfasst:
einen Stückkontaktabschnitt (211a), der dazu eingerichtet ist, in dem Steuermodulrahmen (210) gebildet zu sein, dem Stützblock (321) den Kontakt zu erlauben, den Steuermodulrahmen (210) zu stützen und ein Durchgangsloch (211) aufzuweisen, das mit dem Befestigungsloch (321a) verschraubt ist; und
eine Passaussparung (212), die dazu eingerichtet ist, in dem Steuermodulrahmen (210) gebildet zu sein, das Einpassen des Passstücks (323) dort hinein zu erlauben und den Steuermodulrahmen (210) zu stützen.

## Revendications

1. Bloc-batterie (100) comprenant :
un module de batterie (300) configuré pour comporter un châssis de module de batterie (310) comportant une partie de montage de cellules (330) formée dans celui-ci, sur laquelle est disposée une pluralité de cellules de batterie (400), et une partie de montage de module de commande (320) formée sur une surface latérale extérieure de celui-ci ;
un module de commande (200) configuré pour être couplé à la partie de montage de module de commande (320) et pour commander les opérations des cellules de batterie (400) ; et
une unité de thermistance (250) configurée pour être connectée au module de commande (200), pour entrer en contact avec la cellule de batterie (400) et pour mesurer une température de la cellule de batterie (400),
dans lequel le module de commande (200) comprend :
un châssis de module de commande (210) configuré pour être couplé à la partie de montage de module de commande (320) ;
une carte de circuit imprimé principale (230) configurée pour être disposée sur le châssis de module de commande (210) ; et
une carte de circuit imprimé secondaire (220) configurée pour être disposée sur le châssis de module de commande (210) et pour être connectée électriquement à la carte de circuit imprimé principale (230),
dans lequel une ou plusieurs parties découpées (325, 326) sont formées en étant découpées vers l'intérieur de la partie de montage de module de commande (320),
dans lequel une ou plusieurs saillies (215, 216) sont formées à des positions correspondant aux parties découpées (325, 326) dans le châssis de module de commande (210), de manière à faire saillie vers les parties découpées (325, 326),
dans lequel la carte de circuit imprimé secondaire (220) est formée avec une partie d'extension de circuit (221, 222) qui s'étend jusqu'à la saillie (215, 216),
dans lequel l'unité de thermistance (250) est connectée électriquement à la partie d'extension de circuit (221, 222) et disposée à une extrémité de la saillie (215, 216), et
dans lequel, lorsque la saillie (215, 216) est insérée dans la partie découpée (325, 326), l'unité de thermistance (250) entre en contact avec la cellule de batterie (400).

2. Bloc-batterie (100) selon la revendication 1, dans lequel l'unité de thermistance (250) comprend :
une puce thermistance (251) configurée pour être disposée sur une surface d'extrémité de la saillie (215, 216) ; et
un pad de conduction thermique (253) configuré pour être disposé sur la surface d'extrémité de la saillie (215, 216) et pour entourer la puce thermistance (251).

3. Bloc-batterie (100) selon la revendication 1, comprenant :
une partie d'insertion (341) configurée pour être disposée dans les deux côtés intérieurs de la partie découpée (325, 326) et pour faire saillie dans une direction se faisant face ; et
une saillie d'insertion (217) configurée pour être disposée des deux côtés de la saillie (215, 216) et pour être insérée dans la partie d'insertion (341).

4. Bloc-batterie (100) selon la revendication 1,
dans lequel le module de batterie (300) comprend en outre :
un bloc de support (321) configuré pour être agencé de manière à faire saillie vers l'extérieur à partir de la partie de montage de module de commande (320) et comportant un trou de fixation (321a) formé dans celui-ci ;
une partie étagée (322) configurée pour être formée vers l'intérieur aux deux extrémités de la partie de montage de module de commande (320) et pour permettre l'insertion du châssis de module de commande (210) dans celle-ci ; et
une pièce d'adaptation (323) configurée pour être formée de manière à faire saillie vers l'extérieur à partir de la partie de montage de module de commande (320),
et dans lequel le module de commande (200) comprend :
une partie de contact de pièce (211a) configurée pour être formée dans le châssis de module de commande (210) afin de permettre au bloc de support (321) d'entrer en contact, de supporter le châssis de module de commande (210), et comportant un trou traversant (211) qui est boulonné au trou de fixation (321a) ; et
un évidement d'adaptation (212) configuré pour être formé dans le châssis de module de commande (210) afin de permettre à la pièce d'adaptation (323) d'y être adaptée et de supporter le châssis de module de commande (210).
